# EUROPEAN PATENT SPECIFICATION

(11) **EP 1 625 995 B1**
(45) Date of publication and mention of the grant of the patent: **24.07.2013**
(21) Application number: 04732799.4
(22) Date of filing: 13.05.2004
(51) Int. Cl.: B62J 17/06

(54) **AIR GUIDE STRUCTURE IN MOTOR VEHICLE LEG SHIELD**
LUFTLEITSTRUKTUR FÜR BEINSCHUTZ BEI KRAFTFAHRZEUGEN
STRUCTURE D'ACHEMINEMENT D'AIR DANS UN PROTEGE-JAMBES DE VEHICULE MOTORISE

(30) Priority: 20.05.2003 JP 2003142073
(43) Date of publication of application: 15.02.2006
(73) Proprietor: Yamaha Hatsudoki Kabushiki Kaisha, Iwata-shi, Shizuoka 438-8501 (JP)
(72) Inventor: KONNO, Toshihiko Yamaha Hatsudoki Kabushiki Kaisha, Shizuoka 4388501 (JP); KAMIMURA, Kaoru Yamaha Hatsudoki Kabushiki Kaisha, Shizuoka 4388501 (JP); SUNAGUCHI, Naoto Yamaha Hatsudoki Kabushiki Kaisha, Shizuoka 4388501 (JP)
(74) Representative: Grünecker, Kinkeldey, Stockmair & Schwanhäusser
(86) International application number: PCT/JP2004/006754
(87) International publication number: WO 2004/103805

(56) References cited:
- DE-A1- 3 831 792
- GB-A- 2 127 363
- JP-A- 1 262 278
- JP-A- 58 022 722
- JP-A- 59 143 721
- JP-A- 60 078 296
- JP-A- 2002 173 072
- JP-U- 59 097 184
- US-A- 4 557 345

## Description

The present invention relates to a vehicle according to the preamble of independent claim 1. The prior art document JP 59097184 U discloses such kind of vehicle and refers to a scooter-type vehicle with a leg shield and a heat exchanger facing a front side of the leg shield. A wind guide space is formed inside the leg shield and routed from a front opening to side and rear openings.

A motorcycle (vehicle) comprising a radiator (heat exchanger) for cooling a water-cooled four-cycle engine is known in general. Such a motorcycle is disclosed in Japanese Patent Publication No. 3-48074, for example. In this motorcycle disclosed in Japanese Patent Publication No. 3-48074, a radiator and a pair of wind guide ducts for guiding cooling wind passing through the radiator are arranged on a region between the front surface of a leg shield covering the front sides of the legs of a driver and a cover covering the front surface of this leg shield. When the motorcycle is in motion, running wind (cooling wind) is introduced from an opening of the cover for cooling the radiator, while the cooling wind passing through the radiator is guided by the wind guide ducts to a portion behind a front wheel and discharged.

In the motorcycle disclosed in Japanese Patent Publication No. 3-48074, however, the pair of wind guide ducts must be provided independently of the leg shield, and hence the structure of a portion including a wind guide part for guiding the cooling wind passing through the radiator (heat exchanger) and the leg shield is disadvantageously complicated. Further, the motorcycle disclosed in Japanese Patent Publication No. 3-48074 guides the cooling wind passing through the radiator to the wind guide ducts only through an air stream of the cooling wind, and hence it is difficult to guide a sufficient quantity of air to the wind guide ducts from behind the radiator. Consequently, it is disadvantageously difficult to improve the cooling capability of the radiator (heat exchanger). The present invention has been proposed in order to solve the aforementioned problems.

GB 2 127 363 A discloses a scooter-type motorcycle having a front leg shield. A radiator is mounted in front of said front leg shield. An air passage, which is defined between side walls, a bottom wall of a compartment and a front fender, supplies air from a louvered opening to the radiator when the motorcycle is running. In the storage compartment, a radiator tank is located and is connected to the radiator. After passing through the radiator, the air is discharged through an outlet and flows along a front side of the front leg shield towards an under side of a step floor.

It is an objective of the present invention to provide a vehicle capable of improving the cooling capability of a heat exchanger.

According to the present invention, said objective is solved by a vehicle according to the independent claim 1.

In the vehicle, the wind guide space is formed by the wall part of the leg shield so that no member (wind guide part) forming the wind guide space may be provided independently of the leg shield, whereby the structure of a portion including the wind guide part for guiding the air passed through the heat exchanger and the leg shield can be simplified. Further, the first opening for guiding the air passed through the heat exchanger to the wind guide space and the second opening for discharging the air, passed through the heat exchanger, guided to the wind guide space by the first opening from the wind guide space are so provided on the wall part of the leg shield that the air passed through the heat exchanger can be easily discharged outward through the wind guide space.

The leg shield includes a third opening connected to the wind guide space for opening toward the front portion of the vehicle, and the first opening is provided on an intermediate portion of a wind guide path for discharging air, introduced from the third opening to pass through the wind guide space, from the second opening. According to this structure, the vehicle in motion can exhaust air remaining behind the heat exchanger from the first opening through a stream of air flowing from the third opening toward the second opening, thereby increasing the flow rate of air introduced into the wind guide space from behind the heat exchanger. Thus, the flow rate of the air passing through the heat exchanger is so increased that the cooling capability of the heat exchanger can be improved. Consequently, it is possible to improve the cooling capability of the heat exchanger while simplifying the structure of the portion including the wind guide part for guiding the air passed through the heat exchanger and the leg shield. The air, warmed by the heat exchanger, introduced into the wind guide space from behind the heat exchanger, is mixed with the air introduced from the third opening to be reduced in temperature, whereby the temperature of the air discharged from the second opening can be reduced. Thus, it is possible to inhibit the warm air from hitting the driver, whereby the driver can get a comfortable riding state.

The third opening is such arranged as to introduce the air into the wind guide space when the vehicle is in motion and to discharge heat, introduced from the heat exchanger into the wind guide space, through the first opening when the vehicle comes to a halt. According to the structure, it is possible to suck air remaining behind the heat exchanger from the first opening and discharge the same from the second opening through the stream of air flowing from the third opening to the second opening when the vehicle is in motion, while it is possible to discharge the heat from the heat exchanger through the third opening when the vehicle comes to a halt. Thus, it is possible to excellently radiate the heat from the heat exchanger not only when the vehicle is in motion but also when the vehicle comes to a halt, whereby the cooling capability of the heat exchanger can be more improved.

In this case, the third opening is preferably provided above the first opening and the heat exchanger in the vicinity of the upper end of the wind guide space. According to this structure, the heat can be easily discharged from the heat exchanger through the third opening since the heat is easily transmitted upward.

Preferably, the vehicle further comprises a first rib provided on the wall part of the leg shield for projecting from the edge of the first opening to cover at least the rear portion of the heat exchanger. According to this structure, the air passed through the heat exchanger and remaining behind the heat exchanger can be smoothly guided to the first opening through the first rib when the vehicle is in motion, whereby the flow rate of the air, passing through the heat exchanger, introduced into the wind guide space can be further increased. Further, the first rib can smoothly guide the heat from the heat exchanger to the first opening when the vehicle comes to a halt, whereby heat radiation can be excellently performed. Consequently, the cooling capability of the heat exchanger can be further improved.

In this case, the heat exchanger may include a pair of tank parts arranged at a prescribed interval along the cross direction of the vehicle and a core part arranged between the pair of tank parts, and the vehicle may further comprise a second rib provided on the wall part of the leg shield for projecting from the edge of the first opening to cover the front portions of the tank parts of the heat exchanger. According to this structure, the second rib can guide the air directed toward the tank parts provided on the front side of the heat exchanger to the core part of the heat exchanger when the vehicle is in motion, thereby increasing the flow rate of the air hitting the core part of the heat exchanger. It is possible to improve the cooling capability also by this.

Preferably, the leg shield includes a first cover member arranged at least behind the heat exchanger and a second cover member forming the wind guide space between the same and the first cover member. According to this structure, the wind guide space (wind guide part) can be easily formed by the first cover member and the second cover member constituting the leg shield, whereby the structure of the portion including the wind guide part for guiding the air passed through the heat exchanger and the leg shield can be simplified.

In this case, the second cover member may include a rear cover part arranged on the side of the legs of the driver and a side cover part arranged on the outer side of the rear cover part.

The first opening is preferably formed on the first cover member. According to this structure, the first opening of the first cover member can easily guide the air passed through the heat exchanger to the wind guide space.

The leg shield preferably includes an upper surface part formed on at least either the first cover member or the second cover member to extend in the longitudinal direction, and a stowage space is preferably formed on the upper surface part. According to this structure, the stowage space can be easily formed on the leg shield.

The second opening is preferably arranged under the first opening. According to this structure, the vehicle in motion can easily discharge the air, passed through the heat exchanger, guided to the wind guide space through the first opening from the lower second opening.

The third opening is preferably provided in front of the heat exchanger. According to this structure, the third opening can be easily provided on the front portion of the wind guide space extending from the front portion toward the rear portion of the heat exchanger.

Preferably, the third opening may be formed to extend in the cross direction of the vehicle. According to this structure, running wind can be introduced from the third opening in a wide region along the cross direction of the vehicle when the vehicle is in motion, whereby it is possible to increase the flow rate of the air flowing from the third opening toward the second opening.

The heat exchanger is preferably formed to extend in the cross direction of the vehicle, the leg shield preferably includes a first cover member formed to extend from the rear portion of the heat exchanger toward the front portion of the heat exchanger through the side portion to at least partially constitute the wind guide space, and the first opening is preferably formed on the first cover member while the heat exchanger extending in the cross direction of the vehicle is preferably partially arranged in the wind guide space through the first opening. According to this structure, the length of the leg shield along the cross direction of the vehicle can be reduced due to the heat exchanger partially arranged in the wind guide space of the leg shield through the first opening. Thus, the leg shield can be inhibited from enlarging along the cross direction of the vehicle, thereby inhibiting the width of the vehicle from enlargement. Further, the heat exchanger is so partially arranged in the wind guide space through the first opening that the air passed through the heat exchanger can be more easily guided into the wind guide space from the first opening. Thus, the flow rate of the air passing through the heat exchanger is so increased that the cooling capability of the heat exchanger can be improved.

Preferably, the heat exchanger may include a pair of tank parts arranged at a prescribed interval along the cross direction of the vehicle and a core part arranged between the pair of tank parts, and at least one of the pair of tank parts may be arranged in the wind guide space through the first opening. According to this structure, the leg shield can be easily inhibited from enlarging in the cross direction of the vehicle, while the cooling capability of the heat exchanger can be improved.

Preferably, the wind guide member constituting the wind guide path connecting the inlet and the outlet with each other is provided while this wind guide member is provided with the opening for guiding the air passed through the heat exchanger to the wind guide path so that a wind guide part for guiding the air passed through the heat exchanger can be formed by only the wind guide member, whereby the structure of the wind guide part can be simplified. Further, the vehicle in motion can exhaust air remaining behind the heat exchanger from the opening to the wind guide path through a stream of air flowing from the inlet toward the outlet, thereby increasing the flow rate of air introduced into the wind guide path from behind the heat exchanger. Thus, the flow rate of the air passing through the heat exchanger is so increased that the cooling capability of the heat exchanger can be improved. Further, the air, warmed by the heat exchanger, introduced into the wind guide space from behind the heat exchanger, is mixed with the air introduced from the inlet to be reduced in temperature, whereby the temperature of the air discharged from the outlet can be reduced. Thus, it is possible to inhibit the warm air from hitting a driver, whereby the driver can get a comfortable riding state.

Preferably, no wind guide member (wind guide part) forming the wind guide path may be provided independently of the leg shield, whereby the structure of a portion including the wind guide part for guiding the air passed through the heat exchanger and the leg shield can be easily simplified.

Preferably, the leg shield includes a first wall part extending in the longitudinal direction and a second wall part extending downward from the rear portion of the first wall part, and the heat exchanger is at least partially arranged under the first wall part in front of the second wall part.

Thus, the heat exchanger is at least partially arranged under the first wall part of the leg shield and in front of the second wall part so that a space for arranging the heat exchanger can be ensured without damaging the function of the leg shield covering the front sides of the legs of the driver riding the vehicle.

In this case, the leg shield may further include a third wall part extending upward from an end of the first wall part, and at least the first wall part and the third wall part may form a stowage space. According to this structure, the stowage space can be easily formed on the leg shield.

In the following, the present invention is explained in greater detail by means of embodiments thereof in conjunction with the accompanying drawings, wherein:
Fig. 1 is a side elevational view of a motorcycle according to a first embodiment.
Fig. 2 is a perspective view of a leg shield of the motorcycle according to the first embodiment shown in Fig. 1.
Fig. 3 is a side elevational view of the leg shield of the motorcycle according to the first embodiment shown in Fig. 1.
Fig. 4 is a sectional view of the leg shield according to the first embodiment shown in Fig. 2 taken along the line 100-100.
Fig. 5 is a sectional view of the leg shield according to the first embodiment shown in Fig. 2 taken along the line 200-200.
Fig. 6 is a sectional view for illustrating a heat radiating operation for a radiator performed in the leg shield according to the first embodiment shown in Fig. 5 when the motorcycle comes to a halt.
Fig. 7 is a sectional view showing a leg shield of a motorcycle according to a modification of the first embodiment.
Fig. 8 is a side elevational view of a motorcycle according to a second embodiment.
Fig. 9 is a perspective view of a leg shield of the motorcycle according to the second embodiment shown in Fig. 8.
Fig. 10 is a sectional view of the leg shield according to the second embodiment shown in Fig. 9 taken along the line 300-300.
Fig. 11 is a sectional view of the leg shield according to the second embodiment shown in Fig. 9 taken along the line 400-400.
Fig. 12 is a sectional view for illustrating a heat radiating operation for a radiator performed in the leg shield according to the second embodiment shown in Fig. 11 when the motorcycle comes to a halt.

Embodiments are now described with reference to the drawings. Referring to the drawings, arrow FW denotes the forward traveling direction of a motorcycle 1.

### (First Embodiment)

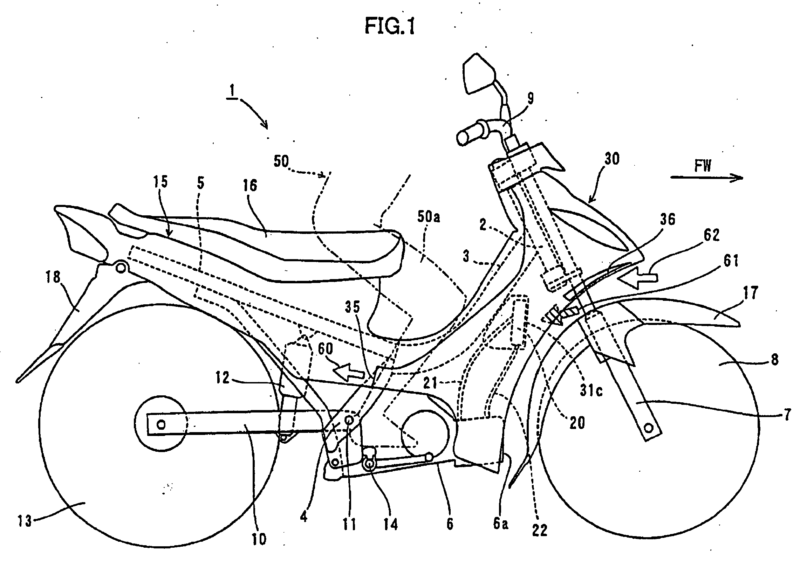

In the motorcycle 1 according to the first embodiment, the front end of a mainframe 3 is connected to a head pipe 2, as shown in Fig. 1. This mainframe 3 is formed to extend backward. Rear arm brackets 4 and a seat rail 5 are connected to the rear end of the mainframe 3. The head pipe 2, the mainframe 3, the rear arm brackets 4 and the seat rail 5 constitute a body frame. A water-cooled four-cycle engine 6 is carried on the rear end of the mainframe 3 and the rear arm brackets 4. This water-cooled four-cycle engine 6 is arranged in a substantially horizontalized state while directing a cylinder 6a frontward.

A front wheel 8 is rotatably mounted on the head pipe 2 through a front fork 7. A handle 9 is mounted on the head pipe 2. This handle 9 horizontally revolves the front wheel 8 through the front fork 7. The front portions of rear arms 10 are mounted on the rear arm brackets 4 to be rockable about a pivot shaft 11. The rear arms 10 are supported on the seat rail 5 through a rear cushion 12. A rear wheel 13 is rotatably mounted on the rear portions of the rear arms 10. Footrests 14 for receiving feet are mounted on the rear arm brackets 4. The footrests 14 are arranged to be located on side portions of the four-cycle engine 6.

A rear cowl 15 is provided to cover the seat rail 5. A seat 16 is mounted on the upper portion of the rear cowl 15. A driver 50 sitting on the seat 16 drives the motorcycle while placing his/her feet on the footrests 14. A front fender 17 covering the front wheel 8 is mounted on the front fork 7. This front fender 17 is revolved in association with the front wheel 8. A rear fender 18 covering the rear wheel 13 is mounted on the rear cowl 15.

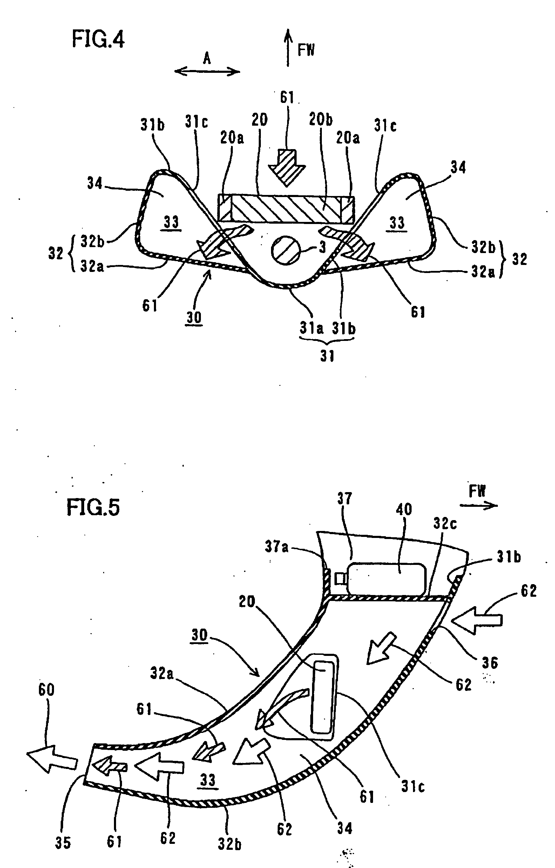

A radiator 20 for cooling the four-cycle engine 6 is arranged on a position above the front side of the cylinder 6a of the four-cycle engine 6 at the back of the front fender 17. This radiator 20 is mounted on the mainframe 3. This radiator 20 is an example of the "heat exchanger" in the present teaching. As shown in Fig. 4, the radiator 20 includes a pair of tank parts 20a arranged at a prescribed interval along the cross direction (direction A in Fig. 4) of the motorcycle 1 and a core part 20b arranged between the pair of tank parts 20a. Further, the radiator 20 is coupled to the four-cycle engine 6 by a supply pipe 21 and a return pipe 22, as shown in Fig. 1.

In order to cool the four-cycle engine 6 with the radiator 20, a coolant warmed by cooling the four-cycle engine 6 is fed to the first tank part 20a of the radiator 20 through the supply pipe 21. The warmed coolant is cooled by the core part 20b of the radiator 20 and thereafter fed to the second tank part 20a of the radiator 20. The cooled coolant is returned to the four-cycle engine 6 through the return pipe 22. The core part 20b of the radiator 20 blows running wind (air) 61 to the core part 20b from the front portion and passes the same through the core part 20b thereby cooling (radiating heat from) the coolant when the motorcycle 1 is in motion.

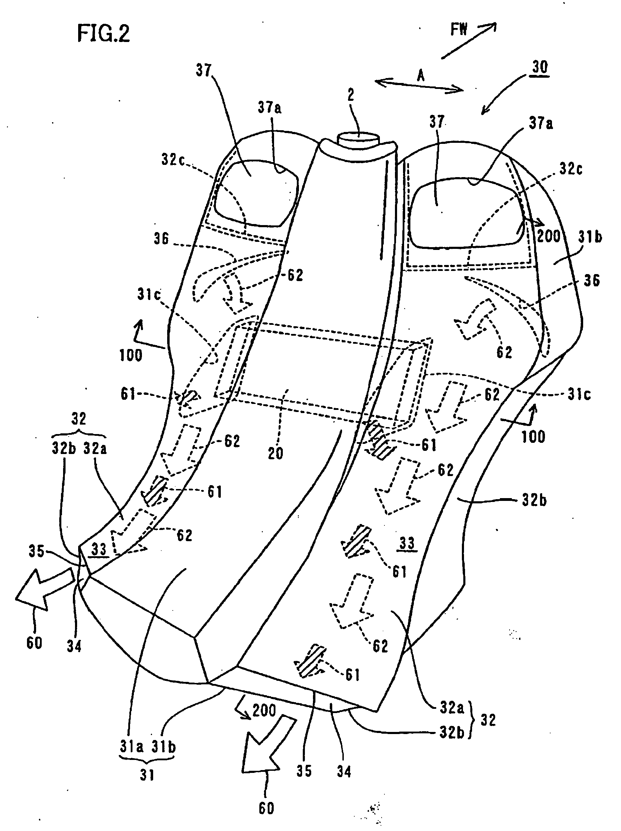

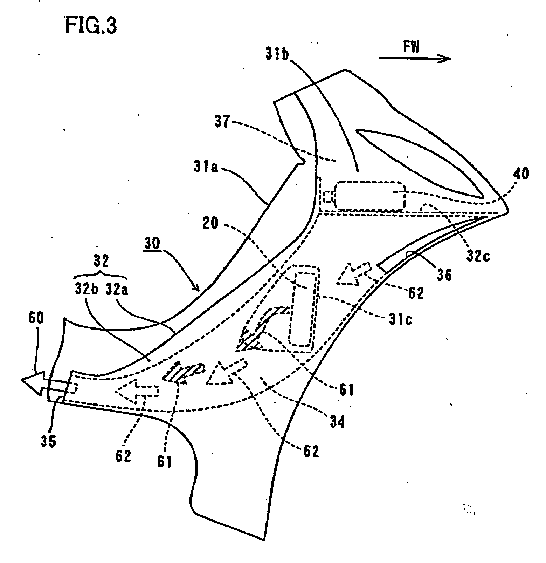

According to the first embodiment, a leg shield 30 is provided to cover the head pipe 2 and the mainframe 3, as shown in Fig. 1. This leg shield 30 is provided to cover the front sides of the legs 50a of the driver 50 riding the motorcycle 1. This leg shield 30 and the rear cowl 15 constitute a body cover. The leg shield 30 constitutes wind guide spaces 33 (see Fig. 2) arranged at the back of the radiator 20 for guiding the air 61 passed through the radiator 20. As shown in Figs. 2 and 3, the leg shield 30 is constituted of a first cover member 31 and a pair of second cover members 32 formed independently of the first cover member 31 and arranged on both sides of the first cover member 31. The first cover member 31 and the second cover members 32 form the wind guide spaces 33.

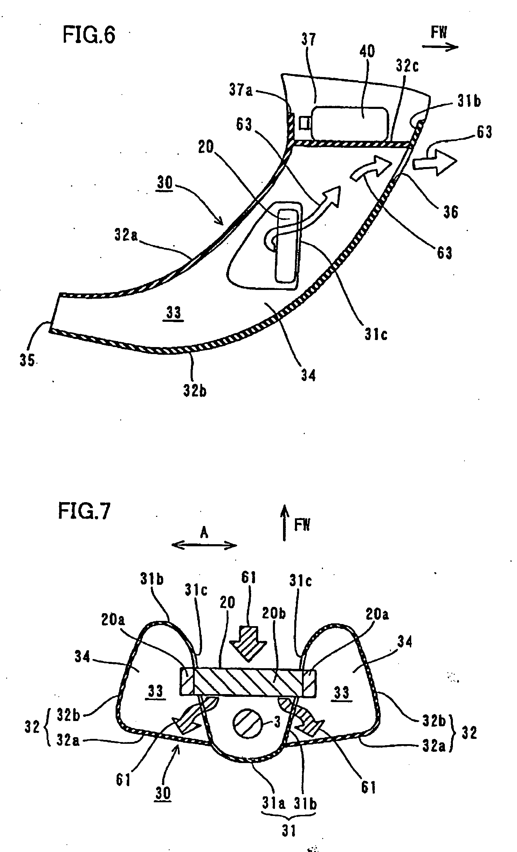

The first cover member 31 is constituted of an outer cover part 31a located on a side closer to the driver 50 (see Fig. 1) behind the radiator 20 and inner cover parts 31b formed continuously to the outer cover part 31a to extend from behind the radiator 20 toward front portions through side portions, as shown in Figs. 2 and 4. These inner cover parts 31b are provided with openings 31c consisting of holes for guiding the air 61 passed through the radiator 20 to the wind guide spaces 33 on portions, close to the radiator 20, located along the rear portion and the side portions of the radiator 20. These openings 31c are examples of the "first opening" in the present teaching. As shown in Figs. 2 and 5, the inner cover parts 31b are provided with inlets 36 consisting of holes opening toward the front portion of the motorcycle 1 above the openings 31c and the radiator 20 in the vicinity of the upper ends of the wind guide spaces 33. These inlets 36 are examples of the "third opening" in the present teaching. These inlets 36 are formed to extend in the cross direction (direction A in Fig. 2) of the motorcycle 1. These inlets 36 have a function (see Fig. 5) of introducing running wind (air) 62 into the wind guide spaces 33 when the motorcycle 1 is in motion and a function (see Fig. 6) of radiating heat 63 introduced into the wind guide spaces 33 from the radiator 20 through the openings 31c when the motorcycle 1 comes to a halt. The inlets 36 are so provided above the openings 31c and the radiator 20 in the vicinity of the upper ends of the wind guide spaces 33 that the heat 63 can be easily radiated from the radiator 20 through the inlets 36 since the heat 63 is easily transmitted upward as shown in Fig. 6.

As shown in Figs. 1 and 5, outlets 35 for discharging the cooling wind (air) 61, passed through the radiator 20, guided by the openings 31c and the running wind (air) 62 introduced through the inlets 36 from the wind guide spaces 33 are provided on the lower ends of the wind guide spaces 33. The outlets 35 are examples of the "second opening" in the present teaching. These outlets 35 are arranged on positions located above the footrests 14 inside the shanks of the driver 50 behind his/her heels, as shown in Fig. 1. Thus, the outlets 35 discharge air 60 from behind the heels of the driver 50, thereby preventing the warm air 61 (see Fig. 2) passed through the radiator 20 from directly hitting the heels of the driver 50. Therefore, the driver 50 can get a comfortable riding state, and is prevented from a misapprehension about overheating of the engine resulting from the warm air 61 passed through the radiator 20 and hitting the heels of the driver 50.

As shown in Fig. 5, portions of the wind guide spaces 33 reaching the outlets 35 from the inlets 36 constitute wind guide paths 34 for discharging the air 62, introduced from the inlets 36 to pass through the wind guide spaces 33, from the outlets 35. The openings 31c for guiding the air 61 passed through the radiator 20 to the wind guide spaces 33 are provided on intermediate portions of the wind guide paths 34.

The pair of second cover members 32 include rear cover parts 32a arranged on the sides closer to the legs 50a of the driver 50 (see Fig. 1) and side cover parts 32b arranged on outer sides of the rear cover parts 32a, as shown in Figs. 2 and 4. Further, longitudinally extending upper surface parts 32c are provided on the upper portions of the rear cover parts 32a, as shown in Fig. 5. The upper surface parts 32c of the rear cover parts 32a and the rear surfaces of the inner cover parts 31b of the first cover member 31 form stowage spaces 37. Thus, according to the first embodiment, it is possible to form the stowage spaces 37 by utilizing portions of the first cover member 31 and the second cover members 32 not used for the wind guide paths 34. Refresher containers 40 are stowed in these stowage spaces 37, for example. Openings 37a (see Fig. 2) of these stowage spaces 37 may be covered with openable/closable lids. As shown in Fig. 3, the radiator 20 is arranged under the upper surface parts 32c of the rear cover parts 32a in front of the rear cover parts 32a. Thus, it is possible to ensure the space for arranging the radiator 20 without damaging the functions of the leg shield 30.

The rear cover parts 32a of the second cover members 32 are examples of the "second wall part" in the present teaching , the upper surface parts 32c of the rear cover parts 32a of the second cover members 32 are examples of the "first wall part" in the present teaching , and the inner cover parts 31b of the first cover member 31 are examples of the "third wall part" in the present teaching. Further, the outer cover part 31a and the inner cover parts 31b of the first cover member 31 and the rear cover parts 32a and the side cover parts 32b of the second cover members 32 are examples of the "wall part of said leg shield" in the present teaching.

According to the first embodiment, as hereinabove described, the first cover member 31 and the second cover members 32 constituting the leg shield 30 form the wind guide spaces 33 while providing the openings 31c for guiding the air 61 passed through the radiator 20 to the wind guide spaces 33 and the outlets 35 for discharging the air 61, passed through the radiator 20, guided by the opening 31c from the wind guide spaces 33 so that no members (wind guide parts) forming the wind guide spaces 33 may be provided independently of the leg shield 30, whereby a structure including the wind guide parts for guiding the air 61 passed through the radiator 20 and the leg shield 30 can be simplified.

According to the first embodiment, as hereinabove described, the leg shield 30 is provided with the inlets 36 opening toward the front portion of the motorcycle 1 while the openings 31c are provided on the intermediate portions of the wind guide paths 34 for discharging the air 62, introduced from the inlets 36 to pass through the wind guide spaces 33, from the outlets 35 so that the air 61 remaining behind the radiator 20 can be exhausted from the openings 31c through the streams of the air 62 flowing from the inlets 36 toward the outlets 35 when the motorcycle 1 is in motion. Thus, the flow rate of the air 61 introduced into the wind guide spaces 33 from behind the radiator 20 can be so increased as to increase the flow rate of the air 61 passing through the radiator 20. Consequently, the cooling capability of the radiator 20 can be improved. Further, the air 61, warmed by the radiator 20, introduced into the wind guide spaces 33 from behind the radiator 20 is mixed with the air 62 introduced from the inlets 36 to be reduced in temperature, whereby the temperature of the air 60 discharged from the outlets 35 can be reduced. Thus, the warm air 61 can be inhibited from hitting the driver 50 also when the air 60 discharged from the outlets 35 hits the driver 50, whereby the driver 50 can get a comfortable riding state.

According to the first embodiment, the inlets 36 are constituted to have the function of introducing the air 62 into the wind guide spaces 33 when the motorcycle 1 is in motion and the function of discharging the heat 63 introduced from the radiator 20 into the wind guide spaces 33 through the openings 31c when the motorcycle 1 comes to a halt, whereby it is possible to exhaust the air 61 remaining behind the radiator 20 from the openings 31c and discharge the same from the outlets 35 through the streams of the air 62 flowing from the inlets 36 toward the outlets 35 when the motorcycle 1 is in motion while it is possible to discharge the heat 63 from the radiator 20 through the inlets 36 when the motorcycle 1 comes to a halt. Thus, it is possible to excellently radiate heat from the radiator 20 not only when the motorcycle 1 is in motion but also when the motorcycle 1 comes to a halt, whereby the cooling capability of the radiator 20 can be further improved.

According to the first embodiment, further, the inlets 36 are formed to extend in the cross direction (direction A in Fig. 2) of the motorcycle 1 so that the running wind (air) 62 can be introduced from the inlets 36 in wide areas along the cross direction of the motorcycle 1 when the motorcycle 1 is in motion, whereby the flow rate of the air 62 flowing from the inlets 36. toward the outlets 35 can be increased.

A modification of the first embodiment is now described with reference to Fig. 7. According to this modification of the first embodiment, both of a pair of tank parts 20a of a radiator 20 arranged at a prescribed interval along the cross direction (direction A in Fig. 7) of a motorcycle 1 are arranged in wind guide spaces 33 through openings 31c, dissimilarly to the aforementioned first embodiment. Thus, the length of a leg shield 30 along the cross direction (direction A in Fig. 7) can be reduced due to the pair of tank parts 20a of the radiator 20 arranged in the wind guide spaces 33 through the openings 31c. Therefore, the leg shield 30 can be inhibited from enlarging in the cross direction (direction A in Fig. 7), whereby the length of the motorcycle 1 along the cross direction (direction A in Fig. 7) can be inhibited from enlargement. According to this modification of the first embodiment, further, the pair of tank parts 20a of the radiator 20 are so arranged in the wind guide spaces 33 through the openings 31c that air 61 passed through the radiator 20 can be more easily guided into the wind guide spaces 33 from the openings 31c. In this modification of the first embodiment, only one of the pair of tank parts 20a may alternatively be arranged in either wind guide space 33.

### (Second Embodiment)

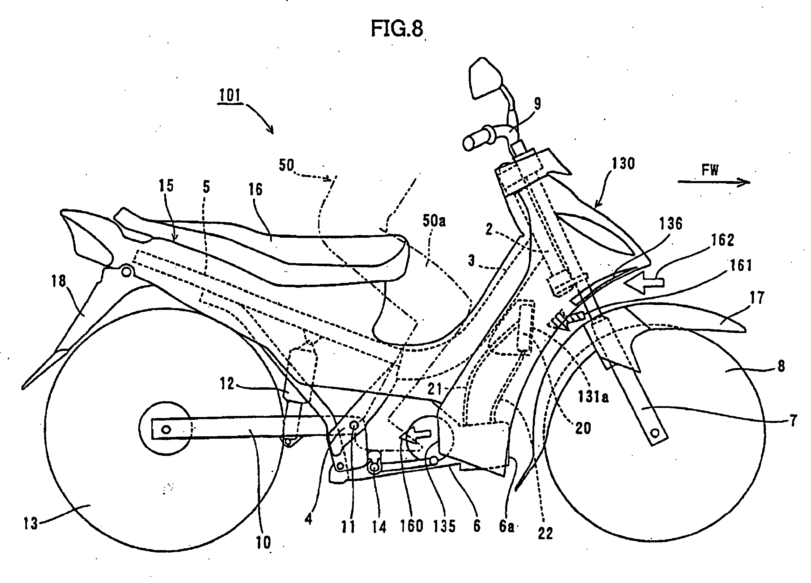

A second embodiment is now described with reference to Figs. 8 to 12. The second embodiment is described with reference to an example employing a leg shield 130 having a structure different from that in the aforementioned first embodiment while providing ribs 131b and 131c projecting toward a radiator 20 on edges of openings 131a of the leg shield 130.

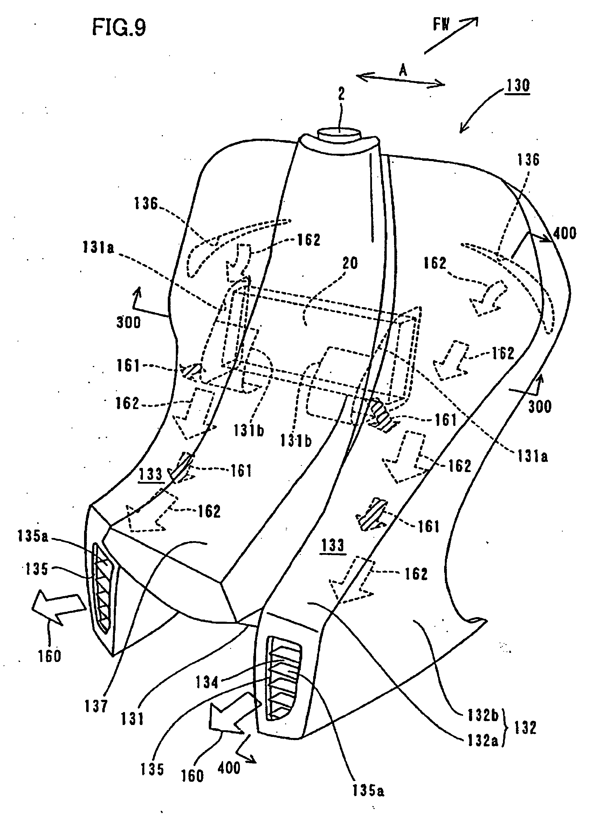

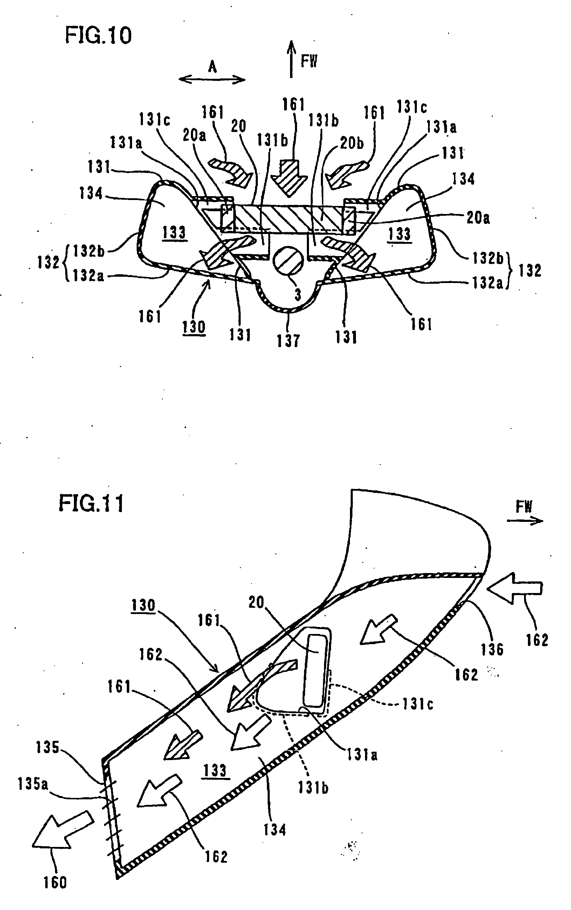

In a motorcycle 101 according to the second embodiment shown in Fig. 8, the structures of portions other than the leg shield 130 are similar to those of the motorcycle 1 according to the first embodiment shown in Fig. 1. The leg shield 130 according to the second embodiment is constituted of a pair of first cover members 131 arranged at a prescribed interval along the cross direction (direction A in Figs. 9 and 10) of the motorcycle 101, a pair of second cover members 132 formed independently of the first cover members 131 for forming wind guide spaces 133 between the same and the pair of first cover members 131 respectively and a third cover member 137 formed independently of the first cover members 131 and the second cover members 132 and arranged between the pair of second cover members 132, as shown in Figs. 9 and 10.

The first cover members 131 are formed to extend from behind the radiator 20 toward front portions through side portions, as shown in Fig. 10. These first cover members 131 are provided with openings 131a consisting of holes for introducing air 161 passed through the radiator 20 into the wind guide spaces 133 on portions, close to the radiator 20, located along the rear portion and the side portions of the radiator 20. These openings 131a are examples of the "first opening" in the present teaching

According to the second embodiment, the first cover members 131 are integrally provided with the ribs 131b projecting from edges of the openings 131a toward the rear side and the lower side of the radiator 20 and the ribs 131c projecting from the edges of the openings 131a toward the front side of the radiator 30, as shown in Figs. 10 and 11. The ribs 131b and the ribs 131c are examples of the "first rib" and the "second rib" in the present teaching respectively. The ribs 131b are formed to cover portions of tank parts 20a located on the rear side and the lower side of the radiator 20 and parts of a core part 20b, as shown in Fig. 10. These ribs 131b are provided for guiding the cooling wind (air) 161 passed through the radiator 20 to the openings 131a when the motorcycle 101 is in motion while guiding heat 163 from the radiator 20 to the openings 131a when the motorcycle 101 comes to a halt. Further, the ribs 131c are formed to cover the portions of the tank parts 20a located on the front side of the radiator 20. These ribs 131c are provided for guiding the air 161 directed toward the tank parts 20a of the radiator 20 to the core part 20b when the motorcycle 101 is in motion.

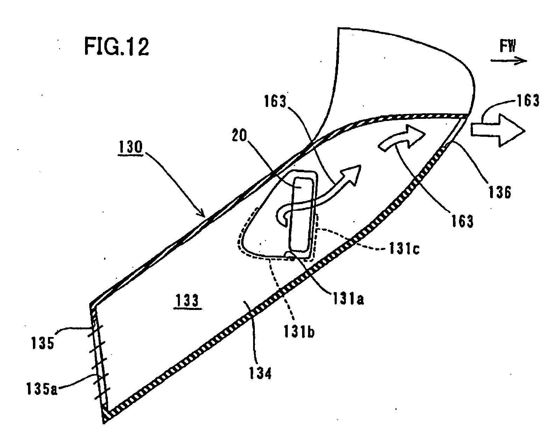

As shown in Fig. 11, inlets 136 consisting of holes connected to the wind guide spaces 133 are provided above the openings 131a and the radiator 20 in the vicinity of the upper ends of the wind guide spaces 133. These inlets 136 are examples of the "third opening" in the present teaching . These inlets 136 are formed to extend in the cross direction (direction A in Fig. 9). Further, these inlets 136 have a function (see Fig. 11) of introducing air 162 into the wind guide spaces 133 when the motorcycle 101 is in motion and a function (see Fig. 12) of discharging the heat 163 introduced from the radiator 20 into the wind guide spaces 133 through the openings 131a when the motorcycle 101 comes to a halt. The inlets 136 are so provided above the openings 131a and the radiator 20 in the vicinity of the upper ends of the wind guide spaces 133 that it is possible to discharge the heat 163 from the radiator 20 through the inlets 136 since the heat 136 is easily transmitted upward.

Outlets 135 consisting of holes for discharging the air 161, passed through the radiator 20, guided by the openings 131a and the air 162 introduced through the inlets 136 from the wind guide spaces 133 are provided on the lower ends of the wind guide spaces 133, as shown in Fig. 11. These outlets 135 are examples of the "second opening" in the present teaching . According to the second embodiment, the outlets 135 are provided in front of the legs 50a of a driver 50 (see Fig. 8), dissimilarly to the aforementioned first embodiment. In other words, the air 160 discharged from the outlets 135 directly hits the legs 50a of the driver 50 according to the second embodiment, as shown in Fig. 8. The outlets 135 are provided with a plurality of louvers 135a for controlling the direction for discharging the air 160, as shown in Figs. 9 and 11.

As shown in Fig. 11, portions of the wind guide spaces 133 reaching the outlets 135 from the inlets 136 constitute wind guide paths 134 for discharging the air 162, introduced from the inlets 136 to pass through the wind guide spaces 133, from the outlets 135. The openings 131a for introducing the air 161 passed through the radiator 20 into the wind guide spaces 133 are provided on intermediate portions of the wind guide paths 134.

The second cover members 132 include rear cover parts 132a arranged on the sides of the legs 50a of the driver 50 (see Fig. 8) and side cover parts 132b arranged on outer sides of the rear cover parts 132a, as shown in Figs. 9 and 10. The first cover members 131 and the rear cover parts 132a and the side cover parts 132b of the second cover members 132 are examples of the "wall part of said leg shield" in the present teaching .

According to the second embodiment, the first cover members 131 and the second cover members 132 constituting the leg shield 130 form the wind guide spaces 133 while providing the openings 131a for guiding the air 161 passed through the radiator 20 to the wind guide spaces 133 and the outlets 135 for discharging the air 161, passed through the radiator 20, guided by the openings 131a from the wind guide spaces 133 so that no members (wind guide parts) forming the wind guide spaces 133 may be provided independently of the leg shield 130 similarly to the aforementioned first embodiment, whereby the structure of a portion including the wind guide parts for guiding the air 161 passed through the radiator 20 and the leg shield 130 can be simplified.

According to the second embodiment, further, the leg shield 130 is provided with the inlets 136 while the openings 131a are provided on the intermediate portions of the wind guide paths 134 for discharging the air 162, introduced from the inlets 136 to pass through the wind guide spaces 133, from the outlets 135 so that the air 161 remaining behind the radiator 20 can be exhausted from the openings 131a through the streams of the air 62 flowing from the inlets 136 toward the outlets 135 when the motorcycle 101 is in motion, whereby the flow rate of the air 161 introduced into the wind guide spaces 133 from behind the radiator 20 can be increased. Thus, the flow rate of the air 161 passing through the radiator 20 can be so increased that the cooling capability of the radiator 20 can be improved, similarly to the aforementioned first embodiment. Further, the air 161, warmed by the radiator 20, introduced into the wind guide spaces 133 from behind the radiator 20 is mixed with the air 162 introduced from the inlets 136 to be reduced in temperature, whereby the temperature of the air 160 discharged from the outlets 135 can be reduced. Thus, the warm air 161 can be inhibited from hitting the driver 50 when the air 160 discharged from the outlets 135 directly hits the legs 50a of the driver 50 (see Fig. 8), whereby the driver 50 can get a comfortable riding state.

According to the second embodiment, as hereinabove described, the ribs 131b projecting from the edges of the openings 131a to cover the portions of the tank parts 20a located on the rear side of the radiator 20 and the core part 20b are so provided that the air 161 passed through the radiator 20 can be smoothly guided to the openings 131a when the motorcycle 101 is in motion, whereby the flow rate of the air 161 passing through the radiator 20 to be introduced into the wind guide spaces 133 can be more increased. When the motorcycle 101 comes to a halt, the heat 163 (see Fig. 12) can be smoothly guided from the radiator 20 to the openings 131a through the ribs 131b, whereby heat radiation can be excellently performed. Consequently, the cooling capability of the radiator 20 can be further improved.

According to the second embodiment, as hereinabove described, the ribs 131c projecting from the edges of the openings 131a to cover the portions of the tank parts 20a located on the front side of the radiator 20 are so provided that the air 161 directed toward the tank parts 20a of the radiator 20 can be guided to the core part 20b when the motorcycle 101 is in motion, whereby the flow rate of the air 161 hitting the core part 20b of the radiator 20 can be increased. It is possible to improve the cooling capability of the radiator 20 also by this.

The remaining effects of the second embodiment are similar to those of the aforementioned first embodiment.

While the above embodiments have been described with reference to motorcycles as examples of the vehicle, the present teaching is not restricted to this but is also similarly applicable to other vehicles such as a tricycle and an ATV (all terrain vehicle: vehicle for running on irregular ground) other than the motorcycle.

While the openings, the inlets and the outlets are constituted of holes in the aforementioned embodiments, the present teaching is not restricted to this but at least any of the openings, the inlets and the outlets may alternatively be formed by notches.

While the wind guide paths are provided on both horizontal sides in the aforementioned embodiments, the present teaching is not restricted to this but the wind guide paths may alternatively be provided only on either horizontal side.

While the radiators are employed in the aforementioned embodiments as examples of the heat exchanger, the present teaching is not restricted to this but a heat exchanger other than a radiator may alternatively be employed. For example, an oil cooler for cooling lubricating oil may alternatively be employed.

While the first cover members and the second cover members consisting of different members are combined with each other to form the wind guide spaces in the aforementioned embodiments, the present teaching is, not restricted to this but the wind guide spaces may alternatively be formed by integrally forming the first cover members and the second cover members.

While the upper surface parts 32c constituting the stowage spaces 37 are integrally provided with the rear cover parts 32a of the second cover members 32 in the first embodiment, the present teaching is not restricted to this but the upper surface parts 32c may alternatively be integrally provided with the first cover member 31, or the upper surface parts 32c may alternatively be provided independently of the first cover member 31 and the second cover members 32.

## Claims

1. Vehicle comprising:
a leg shield (30,130) arranged to cover front sides of legs of a driver riding the vehicle,
a heat exchanger (20) arranged on a front surface side of said leg shield (30,130), wherein a wind guide space (33,133) is formed inside said leg shield (30,130), and a first opening (31 c,131 a) is formed in a portion of a wall part of said leg shield (30,130) located behind said heat exchanger (20) for guiding air passed through said heat exchanger (20) to said wind guide space (33,133), wherein a second opening (35,135) is formed on another portion of the wall part of said leg shield (30,130) separated from said first opening (31c,131a) by a prescribed distance for discharging the air, passed through said heat exchanger (20), guided to said first opening (31c,131a) from said wind guide space (33,133), **characterized in that** said leg shield (30,130) includes a third opening (36,136) connected to said wind guide space (33,133) for opening toward a front portion of the vehicle and introducing air into the wind guide space (33, 133), wherein portion of the wind guide space (33, 133) reaching the second opening (35, 135) from the third opening (36,136) constitute a wind guide path (34, 134) for discharging air, introduced from the third opening (36,136) through the second opening (35,135), and said first opening (31c,131a) is provided on an intermediate portion of the wind guide path (34,134) for mixing air passed through said heat exchanger (20) with air introduced from said third opening (36,136) to pass through said wind guide space (33,133).

2. Vehicle according to claim 1, **characterized in that** said third opening (36,136) is such arranged as to introduce the air into said wind guide space (33,133) when the vehicle is in motion and to discharge heat (63,163), introduced from said heat exchanger into said wind guide space (33,133), through said first opening (31c,131a) when said vehicle comes to a halt.

3. Vehicle according to claim 1 or 2, **characterized in that** said third opening (36,136) is provided above said first opening (31c,131a) and said heat exchanger (20) in the vicinity of an upper end of said wind guide space (33,133).

4. Vehicle according to one of the claims 1 to 3, **characterized by** a first rib (131 b) provided on the wall part of said leg shield (130) for projecting from the edge of said first opening (131a) to cover at least the rear portion of said heat exchanger (20).

5. Vehicle according to claim 4, **characterized in that** said heat exchanger (20) includes a pair of tank parts (20a) arranged at a prescribed interval along the cross direction of the vehicle and a core part (20b) arranged between said pair of tank parts (20a), the vehicle further comprising a second rib (131c) provided on the wall part of said leg shield (130) for projecting from the edge of said first opening (131 a) to cover front portions of the tank parts (20a) of said heat exchanger (20).

6. Vehicle according to one of the claims 1 to 5, **characterized in that** said leg shield (30, 130) includes a first cover member (31, 131) arranged at least behind said heat exchanger (20), and a second cover member (32,132) forming said wind guide space (33,133) between the same and said first cover member (31,131).

7. Vehicle according to claim 6, **characterized in that** said second cover member (32, 132) includes a rear cover part (32a, 132a) arranged on the side of the legs of said driver and a side cover part (32b, 132b) arranged on the outer side of said rear cover part (32a,132a).

8. Vehicle according to claim 6 or 7, **characterized in that** said first opening (31c,131a) is formed on said first cover member (31,131).

9. Vehicle according to one of the claims 6 to 8, **characterized in that** said leg shield (30) includes an upper surface part (32c) formed on at least either said first cover member (31) or said second cover member (32) to extend in the longitudinal direction, and a stowage space (37) is formed on said upper surface part.

10. Vehicle according to one of the claims 1 to 9, **characterized in that** said second opening (35, 135) is arranged under said first opening (31c,131a).

11. Vehicle according to one of the claims 1 to 10, **characterized in that** said third opening (36, 136) is provided in front of said heat exchanger (20).

12. Vehicle according to one of the claims 1 to 11, **characterized in that** said third opening (36, 136) is formed to extend in the cross direction of the vehicle.

13. Vehicle according to one of the claims 1 to 12, **characterized in that** said heat exchanger (20) is formed to extend in the cross direction of the vehicle,said leg shield (30) includes a first cover member (31) formed to extend from the rear portion of said heat exchanger (20) toward the front portion of said heat exchanger (20) through a side portion to at least partially constitute said wind guide space (33), and said first opening (31c) is formed on said first cover member (31) while the heat exchanger (20) extending in the cross direction of said vehicle is partially arranged in said wind guide space (33) through said first opening (31 c).

14. Vehicle according to claim 13, **characterized in that** said heat exchanger (20) includes:a pair of tank parts (20a) arranged at a prescribed interval along the cross direction of the vehicle, and a core part (20b) arranged between said pair of tank parts (20a), and at least one of said pair of tank parts (20a) is arranged in said wind guide space (33) through said first opening (31 c).

15. Vehicle according to one of the claims 1 to 14, **characterized in that** the third opening (36,136) is an inlet for introducing air when the vehicle is in motion, the second opening (35,135) is an outlet formed at a prescribed distance from said inlet for discharging said introduced air, and a wind guide member (31, 32, 131, 132) constitutes a wind guide path (34,134) connecting said inlet and said outlet with each other.

16. Vehicle according to claim 15, **characterized in that** said wind guide (31,32,131,132) is included in the leg shield (30,130).

17. Vehicle according to one of the claims 1 to 16, **characterized in that** a first wall part (32c) extends in longitudinal direction, a second wall part (32a) extends downward from a rear portion of said first wall part (32c), and said heat exchanger (20) is at least partially arranged under said first wall part (32c) in front of said second wall part (32a).

18. Vehicle according to claim 17, **characterized in that** said leg shield (30) further includes a third wall part (31b) extending upward from an end of said first wall part (32c), and at least said first wall part (32c) and said third wall part (31 b) form a stowage space (37).

## Patentansprüche

1. Fahrzeug, aufweisend:
ein Beinschild (30, 130), angeordnet, um Vorderseiten der Beine eines Fahrers, der das Fahrzeug fährt, abzudecken,
einen Wärmetauscher (20), angeordnet an einer vorderen Oberflächenseite des Beinschildes (30, 130), wobei ein Windführungsraum (33, 133) innerhalb des Beinschildes (30, 130) gebildet ist und eine erste Öffnung (31 c, 131 a) gebildet ist in einem Abschnitt eines Wandteils des Beinschildes (30,130), angeordnet hinter dem Wärmetauscher (20), zum Führen von Luft, die durch den Wärmetauscher (20) hindurchgegangen ist, in den Windführungsraum (33, 133), wobei eine zweite Öffnung (35, 135) gebildet ist an einem weiteren Abschnitt des Wandteils des Beinschildes (30,130), getrennt von der ersten Öffnung (31c, 131a) durch einen vorgeschriebenen Abstand zum Abgeben der Luft, hindurchgegangen durch den Wärmetauscher (20), geführt in die erste Öffnung (31c, 131a) von dem Windführungsraum (33, 133), **dadurch gekennzeichnet, dass** das Beinschild (30,130) eine dritte Öffnung (38, 136) enthält, verbunden mit dem Windführungsraum (33, 133) zum Öffnen in Richtung zu einem vorderen Abschnitt des Fahrzeuges und die Luft in den Windführungsraum (33, 133) einleitet, wobei ein Abschnitt des Windführungsraumes (33, 133), der die zweite Öffnung (35, 135) von der dritten Öffnung (38, 136) erreicht, einen Windführungspfad (34, 134) bildet zum Abgeben von Luft, eingeleitet von der dritten Öffnung (38, 136) durch die zweite Öffnung (35, 135), und wobei die erste Öffnung (31c, 131a) an einem Zwischenabschnitt des Windführungspfades (34, 134) vorgesehen ist, zum Mischen von Luft, durchgegangen durch den Wärmetauscher (20) mit Luft, eingeleitet von der dritten Öffnung (38, 136), um durch den Windführungsraum (33, 133) hindurchzugehen.

2. Fahrzeug nach Anspruch 1, **dadurch gekennzeichnet, dass** die Öffnung (36, 136) derart angeordnet ist, um die Luft in den Windführungsraum (33, 133) einzuleiten, wenn das Fahrzeug in Bewegung ist, und um Wärme (63, 163), eingeleitet von dem Wärmetauscher in den Windführungsraum (33, 133), durch die erste Öffnung (31 c, 131 a), abzugeben, wenn das Fahrzeug zu einem Halt kommt.

3. Fahrzeug nach Anspruch 1 oder 2, **dadurch gekennzeichnet, dass** die dritte Öffnung (38, 136) oberhalb der ersten Öffnung (31c, 131a) und dem Wärmetauscher (20) in der Nähe eines oberen Endes des Windführungsraum (33, 133) vorgesehen ist.

4. Fahrzeug nach einem der Ansprüche 1 bis 3, **gekennzeichnet durch** eine erste Rippe (131 b), angeordnet an dem Wandteil des Beinschildes (130), um von der Kante der ersten Öffnung (31 c, 131 a) vorzuspringen, um zumindest den hinteren Abschnitt des Wärmetauschers (20) abzudecken.

5. Fahrzeug nach Anspruch 4, **dadurch gekennzeichnet, dass** der Wärmetauscher (20) ein Paar von Tankteilen (20a), angeordnet in einem vorgeschriebenen Intervall entlang der Richtung quer des Fahrzeuges und ein Kernteil (20b), angeordnet zwischen dem Paar von Tankteilen (20a), enthält, wobei das Fahrzeug außerdem aufweist eine zweite Rippe (131c), vorgesehen an dem Wandteil des Beinschildes (130), um von der Kante der ersten Öffnung (31 c, 131 a) vorzuspringen, um vordere Abschnitt der Tankteile (20a) des Wärmetauschers (20) abzudecken.

6. Fahrzeug nach einem der Ansprüche 1 bis 5, **dadurch gekennzeichnet, dass** das Beinschild (30, 130) ein erstes Abdeckteil (31, 131), angeordnet zumindest hinter dem Wärmetauscher (20), und ein zweites Abdeckteil (32, 132), das den Windführungsraum (33, 133) zwischen demselben und dem ersten Abdeckteil (31, 131) bildet, enthält.

7. Fahrzeug nach Anspruch 6, **dadurch gekennzeichnet, dass** das zweite Abdeckteil (32, 132) ein hinteres Abdeckteil (32a, 132a), angeordnet auf der Seite der Beine des Fahrers, und ein Seitenabdeckteil (32b, 132b), angeordnet auf der Außenseite des hinteren Abdeckteils (32a, 132a), enthält.

8. Fahrzeug nach Anspruch 6 oder 7, **dadurch gekennzeichnet, dass** die erste Öffnung (31 c, 131 a) an dem ersten Abdeckteil (31, 131) gebildet ist.

9. Fahrzeug nach einem der Ansprüche 6 bis 8, **dadurch gekennzeichnet, dass** das Beinschild (30, 130) ein oberes Oberflächenteil (32c) enthält, gebildet an zumindest einem von dem ersten Abdeckteil (31) oder dem zweiten Abdeckteil (32), um sich in der Längsrichtung zu erstrecken, und ein Stauraum (37) an dem oberen Oberflächenteil gebildet ist.

10. Fahrzeug nach einem der Ansprüche 1 bis 9, **dadurch gekennzeichnet, dass** die zweite Öffnung (35, 135) unter der ersten Öffnung (31 c, 131 a) angeordnet ist.

11. Fahrzeug nach einem der Ansprüche 1 bis 10, **dadurch gekennzeichnet, dass** die dritte Öffnung (38, 136) vor dem Wärmetauscher (20) vorgesehen ist.

12. Fahrzeug nach einem der Ansprüche 1 bis 11, **dadurch gekennzeichnet, dass** die dritte Öffnung (38, 136) gebildet ist, um sich in Richtung quer des Fahrzeuges zu erstrecken.

13. Fahrzeug nach einem der Ansprüche 1 bis 12, **dadurch gekennzeichnet, dass** der Wärmetauscher (20) gebildet ist, um sich in Richtung quer des Fahrzeuges zu erstrecken, wobei das Beinschild (30, 130) ein erstes Abdeckteil (31) enthält, gebildet, um sich von dem hinteren Abschnitt des Wärmetauschers (20) in Richtung zu dem vorderen Abschnitt des Wärmetauschers (20) durch einen Seitenabschnitt zu erstrecken, um zumindest teilweise den Windführungsraum (33, 133) zu bilden, und wobei die erste Öffnung (31 c) an dem ersten Abdeckteil (31) gebildet ist, während sich der Wärmetauscher (20), der sich in der Richtung quer des Fahrzeuges erstreckt, teilweise in dem Windführungsraum (33) durch die erste Öffnung (31 c) angeordnet ist.

14. Fahrzeug nach Anspruch 13, **dadurch gekennzeichnet, dass** der Wärmetauscher (20) ein Paar von Tankteilen (20a) enthält, angeordnet in einem vorgeschriebenen Intervall entlang der Richtung quer des Fahrzeuges, und ein Kernteil (20b), angeordnet zwischen dem Paar von Tankteilen (20a), und wobei zumindest eines von dem Paar von Tankteilen (20a) in dem Windführungsraum (33) durch die erste Öffnung (31 c) angeordnet ist.

15. Fahrzeug nach einem der Ansprüche 1 bis 14, **dadurch gekennzeichnet, dass** die dritte Öffnung (38, 136) ein Einlass zum Einleiten von Luft ist, wenn das Fahrzeug in Bewegung ist, die zweite Öffnung (35, 135) ein Auslass ist, gebildet in einem vorgeschriebenen Abstand von dem Einlass, um die eingeleitete Luft abzugeben, und wobei ein Windführungsteil (31, 32, 131, 132) einen Windführungspfad (34, 134) bildet, der den Einlass und den Auslass miteinander verbindet.

16. Fahrzeug nach Anspruch 15, **dadurch gekennzeichnet, dass** die Windführung (31, 32, 131, 132) in dem Beinschild (30, 130) enthalten ist.

17. Fahrzeug nach einem der Ansprüche 1 bis 16, **dadurch gekennzeichnet, dass** sich ein erstes Wandteil (32c) in Längsrichtung erstreckt, sich ein zweites Wandteil (32a) nach unten von einem hinteren Abschnitt des ersten Wandteils (32c) erstreckt und der Wärmetauscher (20) zumindest teilweise unter dem ersten Wandteil (32c) vor dem zweiten Wandteils (32a) angeordnet ist.

18. Fahrzeug nach Anspruch 17, **dadurch gekennzeichnet, dass** das Beinschild (30) außerdem ein drittes Wandteil (31 b) enthält, das sich nach oben von einem Ende des ersten Wandteils (32c) erstreckt, und wobei zumindest das erste Wandteil (32c) und das dritte Wandteil (31 b) einen Stauraum (37) bilden.

## Revendications

1. véhicule comprenant :
un protège - jambes (30, 130) agencé pour recouvrir les cotés avant des jambes d'un pilote chevauchant le véhicule,
un échangeur de chaleur (20) agencé du côté de la surface avant dudit protège - jambes (30, 130), dans lequel un espace de guidage du vent (33, 133) est formé à l'intérieur dudit protège - jambes (30, 130), et une première ouverture (31c, 131a) est formée dans une partie d'une pièce de paroi dudit protège - jambes (30, 130) située derrière ledit échangeur de chaleur (20) afin de guider l'air qui a traversé ledit échangeur de chaleur (20) vers ledit de espace de guidage du vent (33, 133) dans lequel une deuxième ouverture (35, 135) est formée sur une autre partie de la pièce de paroi dudit protège - jambes (30, 130) séparée de ladite première ouverture (31c, 131a) d'une distance prescrite afin d'évacuer l'air, ayant traversé ledit échangeur de chaleur (20), guidée vers ladite première ouverture (31c, 131a) à partir dudit espace de guidage du vent (33, 133), **caractérisé en ce que** ledit protège - jambes (30, 130) inclut une troisième ouverture (36, 136) raccordée au dit espace de guidage du vent (33, 133) en vue d'une ouverture vers une partie avant du véhicule et de l'introduction d'air dans l'espace de guidage du vent (33, 133), dans lequel une partie de l'espace de guidage du vent (33, 133) atteignant la deuxième ouverture (35, 135) à partir de la troisième ouverture (36, 136) constitue un trajet de guidage du vent (34, 134) destiné à évacuer l'air, introduit à partir de la troisième ouverture (36, 136) au travers de la seconde ouverture (35, 135), et ladite première ouverture (31c, 131a) est prévue sur une partie intermédiaire du trajet de guidage du vent (34, 134) dans le but de mélanger l'air ayant traversé ledit échangeur de chaleur (20), de l'air étant introduit à partir de ladite troisième ouverture (36, 136) afin de traverser ledit espace de guidage du vent (33, 133).

2. Véhicule selon la revendication 1, **caractérisé en ce que** ladite troisième ouverture (36, 136) est arrangée de manière à introduire l'air dans ledit espace de guidage du vent (33, 133) lorsque le véhicule est en mouvement, et à éjecter la chaleur (63, 163), introduite à partir dudit échangeur de chaleur dans ledit espace de guidage du vent (33, 133) au travers de ladite première ouverture (31c, 131a) lorsque ledit véhicule vient à s'arrêter.

3. Véhicule selon la revendication 1 ou 2, **caractérisé en ce que** ladite troisième ouverture (36, 136) est ménagée au-dessus de ladite première ouverture (31c, 131a) et dudit échangeur de chaleur (20) au voisinage d'une extrémité supérieure dudit espace de guidage du vent (33, 133).

4. Véhicule selon l'une des revendications 1 à 3, **caractérisé par** une première nervure (131b) prévue sur la pièce de paroi dudit protège - jambes (130) pour qu'elle dépasse du bord de ladite première ouverture (131a) pour couvrir au moins la partie arrière dudit échangeur de chaleur (20).

5. Véhicule selon la revendication 4, **caractérisé en ce que** ledit échangeur de chaleur (20). Inclut une paire de pièces de réservoir (20a) agencées à un intervalle prescrit le long de la direction latérale du véhicule, ainsi qu'une pièce centrale (20b) agencée derrière ladite paire de pièces de réservoir (20a), le véhicule comprenant en outre une seconde nervure (131c) ménagée sur ladite pièce de paroi dudit protège - jambes (130) pour qu'elle dépasse du bord de ladite première ouverture (131a) afin de couvrir des parties avant des pièces de réservoir (20a) dudit échangeur de chaleur (20).

6. Véhicule selon l'une des revendications 1 à 5, **caractérisé en ce que** ledit protège - jambes (30, 130) inclut un premier élément de couverture (31, 131) agencé au moins derrière ledit échangeur de chaleur (20), et un second élément de couverture (32, 132) formant ledit espace de guidage du vent (33, 133) entre celui-ci et ledit premier élément de couverture (31, 131).

7. Véhicule selon la revendication 6, **caractérisé en ce que** ledit second élément de couverture (32, 132) inclut une partie de couverture arrière (32a, 132a) agencée sur le côté des jambes dudit pilote, ainsi qu'une partie de couverture latérale (32b, 132b) agencée sur le côté externe de ladite partie de couverture arrière (32a, 132a).

8. véhicule selon la revendication 6 ou 7, **caractérisé en ce que** ladite première ouverture (31c, 131a) est formée sur ledit premier élément de couverture (31, 131).

9. Véhicule selon l'une des revendications 6 à 8, **caractérisé en ce que** ledit protège - jambes (30) inclut une partie de surface supérieure (32c) formée sur au moins soit ledit premier élément de couverture (31), soit ledit second élément de couverture (32) pour s'étendre dans la direction longitudinale, et un espace d'arrimage (37) est formé sur ladite pièce de surface supérieure.

10. véhicule selon l'une des revendications 1 à 9, **caractérisé en ce que** ladite deuxième ouverture (35, 135) est agencée sous ladite première ouverture (31c, 131a).

11. Véhicule selon l'une des revendications 1 à 10, **caractérisé en ce que** ladite troisième ouverture (36, 136) est prévue en face dudit échangeur de chaleur (20).

12. véhicule selon l'une des revendications 1 à 11, **caractérisé en ce que** ladite troisième ouverture (36, 136) est formée pour s'étendre dans la direction latérale du véhicule.

13. Véhicule selon l'une des revendications 1 à 12, les **caractérisé en ce que** ledit échangeur de chaleur (20) est formé pour s'étendre dans la direction latérale du véhicule, ledit protège - jambes (30) inclut un premier élément de couverture (31) formé pour s'étendre depuis la partie arrière dudit échangeur de chaleur (20) vers la partie avant dudit échangeur de chaleur (20) au travers d'une partie latérale pour au moins constituer partiellement ledit espace de guidage du vent (33), et ladite première ouverture (31c) est formée sur ledit premier élément de couverture (31) alors que l'échangeur de chaleur (20), s'étendant dans la direction latérale dudit véhicule, est partiellement agencée dans ledit espace de guidage du vent (33) au travers de ladite première ouverture (31c).

14. Véhicule selon la revendication 13, **caractérisé en ce que** ledit échangeur de chaleur (20) inclut une paire de pièces de réservoir (20a) agencées à un intervalle prescrit le long de la direction latérale du véhicule, ainsi qu'une pièce centrale (20b) agencée entre ladite paire de pièces de réservoir (20a), et au moins l'une de ladite paire de pièces de réservoir (20a) est agencée dans ledit espace de guidage du vent (33) au travers de ladite première ouverture (31c).

15. Véhicule selon l'une des revendications 1 à 14, **caractérisé en ce que** la troisième ouverture (36, 136) est un orifice d'entrée permettant d'introduire de l'air lorsque le véhicule est en mouvement, la deuxième ouverture (35, 135) est un orifice de sortie formé à une distance prescrite dudit orifice d'entrée dans le but d'évacuer ledit air introduit, et un élément de guidage de vent (31, 32, 131, 132) constitue le trajet de guidage du vent (34, 134) raccordant ledit orifice d'entrée et ledit orifice de sortie l'un à l'autre.

16. Véhicule selon la revendication 15, **caractérisé en ce que** ledit guide de vent (31, 32, 131, 132) est inclus dans le protège - jambes (30, 130).

17. Véhicule selon l'une des revendications 1 à 16, **caractérisé en ce qu'**une première pièce de paroi (32c) s'étend dans la direction longitudinale, une seconde pièce de paroi (32a) s'étend vers le bas depuis une partie arrière de ladite première pièce de paroi (32c) et ledit échangeur de chaleur (20) est au moins partiellement disposé sous ladite première pièce de paroi (32c) en face de ladite seconde pièce de paroi (32a).

18. véhicule selon la revendication 17, **caractérisé en ce que** ledit protège - jambes (30) inclut en outre une troisième pièce de paroi (31b) s'étendant vers le haut depuis l'extrémité de ladite première pièce de paroi (32c) et ladite première pièce de paroi (32c) avec ladite troisième pièce de paroi (31b) forment un espace d'arrimage (37).
